# EUROPEAN PATENT APPLICATION

(11) **EP 1 563 887 A1**
(43) Date of publication of application: **17.08.2005**
(21) Application number: 05002921.4
(22) Date of filing: 11.02.2005
(51) Int. Cl.: B01D 25/24

(54) **Filter**

(30) Priority: 12.02.2004 US 543942 P; 07.01.2005 US 30939
(71) Applicant: Pank, Thomas E., Walkersville, MD 21793 (US)
(72) Inventor: Pank, Thomas E., Walkersville, MD 21793 (US)
(74) Representative: Burrows, Anthony Gregory

(57) **Abstract**

A filter for filtering fluids is made by stacking two or more strips 7 to 9 of flexible material and then wrapping the stack around a centreline to form a spiral-shaped roll-form filtering element 19 that has several laps of the strips 7 to 9. The resulting element has an input side which is the bottom wall of a reservoir which contains the fluid to be filtered, such as the run-off water from a car park. The reservoir may have a by-pass outlet which bypasses the water around the element 19 in the event that the flow rate of the incoming fluid exceeds the maximum rate of flow at which the filter is efficient. The strips 7 to 9 guide the fluid as the fluid passes through the filter.

## Description

This invention relates to a filter and a method of making the same.

US-A-5,746 911 and US-A-6264835 disclose physical separators that accomplish a great deal in environmental protection. However, there is no disclosure that they remove dissolved contaminants, nor that they remove sediment particles in the fine silt and clay size range.

Filtration is a proven method of removing foreign matter, i.e. dissolved and very fine impurities, from a fluid. The most commonly used filter in the stormwater industry is a depth filter. A depth filter uses media (sand, for example) that the fluid must pass through. The removal is achieved by a combination of two mechanisms: transport and attachment. In a sand filter, the individual grains obstruct the flow of the water, forcing the water to take a more tortuous path through the filter. When this happens, the water comes into contact with far more of the media than it would if it were to flow straight through the filter. The water, along with the foreign matter to be removed, is in contact with the individual grains of sand or other filter media. Bringing the foreign matter into contact with the filter media is the first stage - the foreign matter is transported into contact with the filter media.

In order to remove the foreign matter from a gaseous or liquid fluid, the media must have some way of capturing and retaining the foreign matter. This can be accomplished in a number of ways, from chemical bonding on reactive media to simple sedimentation in interstices of the media. When designed carefully, media filtration is capable of removing large foreign matter loads from influent fluid streams.

The selection of filter media can depend on many factors, including the type of foreign matter targeted for removal, the desired flow rates through the filter, and the cost and weight of the media. While filtration is a proven technology in fields like wastewater and drinking water treatment and industrial processes, it is relatively new in the field of stormwater treatment.

One of the challenges of stormwater management is dealing with the highly variable run-off flow rates that result from storms. In stormwater applications, treatment devices are subjected to widely varying flow rates, from very slow trickles to the run-off resulting from torrential downpours. To accommodate these variations, many stormwater treatment devices are designed with an internal by-pass. The internal by-pass allows flows in excess of the intended treatment capacity to pass through the unit untreated, while continuing to treat flows within the intended range. This is a viable technology because of the "first flush" effect in stormwater run-off. During the beginning of a storm event, a "flush" of foreign matter, i.e. pollutants, is carried off from a site with the first bit of run-off. This flush includes the pollutants that have collected on that site since the last storm, and comprises the majority of the pollution load from each storm event. If the first flush is treated adequately, a majority of the potential pollutants will be removed during that treatment, and the subsequent by-pass flow during an extreme storm will not contain the same heavy pollutant load.

Filters that clean fluids, namely gases and liquids, are well known.

Filters for cleaning run-off water are well known, yet are not only expensive to manufacture but also require expensive maintenance.

Filters made by rolling a strip of fabric into a spiral coil having several laps are well known, examples being disclosed in US-A-5,160,039 and US-A-4,861,465.

US-A-6,099,729 discloses a filter having a hollow, perforated, metal cylinder with a single lap of a pleated filtering element extending round the cylinder. The pleated element has several layers of flexible material.

US-A-2002/0117435 discloses a system which filters run-off water containing oil and an emulsion of oil and water. A tank receives the inlet water and feeds it to a reservoir which in turn feeds the water to cylindrical filter cells which serve to remove the emulsion in particular. The water passing through the filter cells is received by a manifold which feeds the clean water to an outlet. However, when the run-off water has a high rate of flow, the reservoir soon overflows and the excess water flows directly to an outlet. The reservoir may be either above or below the filter cells. If above, the water entering the inlet flows downward to a reservoir which is perforated to provide water to the filter cells. If, however, the reservoir is below the filter cells it has a perforated top which feeds the filter cells. The water in the reservoir is under pressure. The filter cells may be cylindrical and have an inner vertical cylindrical passageway surrounded by one or more cylindrical layers. One filtering media is in the inner passageway. Each cylindrical layer provides a different filtering media. In one embodiment, the filtering media in the inner passageway is coarse media and the filtering media in the cylindrical layer or layers is finer media. Each layer of the filter is bounded by a porous barrier, which may be geotextile material, fine enough to retain the finer media but porous enough to allow water to pass through it. Surrounding, and spaced from, the outermost barrier is an outer wall. The space between the outermost barrier and the wall forms a drain for feeding the filtered liquid to an output.

According to one aspect of the present invention, there is provided a method comprising producing a filter for filtering a fluid, said producing comprising:
providing a plurality of face-to-face layers of flexible materials at least one of which comprises filtering media, and
forming said layers into a filter element by causing said layers to extend around a linear central zone for more than 360 degrees, thereby to provide an overlap.

According to another aspect of the present invention, there is provided a filter for filtering a fluid, comprising a plurality of face-to-face layers of materials with at least one of said layers comprising filtering media, said layers extending round a linear central zone for more than 360 degrees, thereby providing a filter element having an overlap.

Owing to these aspects of the invention, it is possible to produce an effective filter element relatively easily and cheaply.

According to a third aspect of the present invention, there is provided a filter for use in filtering a fluid, said filter comprising sheet material comprised of an inlet volume and an outlet volume and a filtering layer permeable by said fluid and sandwiched between them, said inlet volume being accessible by said fluid at an input linear edge thereof and permeable by said fluid at its major surface at said filtering layer.

Owing to this aspect of the invention, it is possible to provide an effective and yet compact filter in which the inflowing fluid is distributed over substantially the whole surface area of the filtering layer.

The inlet layer or volume and the outlet layer or volume may be empty chambers, but at least the inlet layer or volume thereof is preferably so designed of solid material as to be readily permeable by the fluid to be filtered.

Owing to the invention, it is possible to provide a filter that will clean both liquids and gases. It is also possible to reduce the cost of the filter and its maintenance. Especially, it is possible to provide a simple, yet very effective, filter for run-off water, from e.g. car parks and garages, that has a low initial cost as well as low maintenance costs.

In particular, it is possible to provide a filter in which the filtering material is flexible and has been wrapped around a centreline, which may be established by a centre post, to form a spiral-shaped filtering element. Such a filter may be used anywhere that filters can be employed; for example it may filter the air fed to an internal combustion engine, or it may filter the air heated by a furnace and circulated in a building.

The wrapped filtering material may include means for causing the media that is being filtered to take a circuitous route as it passes through the filtering material. This increases the efficiency of the filter.

Advantageously, the present method comprises stacking parallelly to each other two or more strips of flexible material (including filtering media), and wrapping the contiguous strips around a centreline to provide a filtering element wherein at least part of the wrapped strips overlaps the first lap. In the broadest form of the method, the amount of overlap may be small, for example 10°, however two laps (720°), three laps (1080°), or preferably about ten to fifteen laps may be employed.

The fluid (liquid and/or gas) to be filtered is preferably fed to the filter element in a direction parallel to a centreline of the filter element, although it is possible to pass the fluid through the filter element in any suitable direction.

In a preferred form, there are three strips which are stacked and wrapped into a roll. When the strips have been wrapped and the fluid is fed to them it enters the first of the three strips. The second of the three strips is filtering media and the third strip is a drain for discharging the fluid from the filter element. The first strip not only receives the incoming fluid but redirects the fluid to pass the fluid through the filtering media to the drain.

To achieve the aforementioned redirecting function the first strip is open to receive fluid flow at its input longitudinal edge but closed to such flow at its other longitudinal edge. As a result, the fluid can be redirected from a vertical incoming flow to a flow that has a horizontal component.

The drain is closed to the fluid at the input side of the filter element but open at the output side of the element.

The foregoing wrapped filter element may be fed by a reservoir the bottom of which is the input side of the filter element. The reservoir may have a by-pass outlet to discharge the fluid when the incoming fluid has a very large rate of flow.

In order that the invention may be clearly and completely disclosed, reference will now be made, by way of example, to the accompanying drawings, in which:-
Figure 1 is a side view of a band of filtering sheet material prior to rolling-up thereof;
Figure 2 is a plan view of the band of Figure 1;
Figure 3 is a plan view of a rolled filter cartridge containing a filter element produced by the rolling-up of the band of Figures 1 and 2;
Figure 4 shows a vertical section through the cartridge and taken along the line IV-IV in Figure 3;
Figure 5 shows a detail of Figure 4;
Figure 6 is a sectional plan view of a filter incorporating the cartridge of Figures 3 and 4;
Figure 7 shows a vertical section through the filter and taken along the line VII - VII in Figure 6;
Figure 8 shows a vertical section through a first modified form of the filter;
Figure 9 is a view corresponding to Figure 1, but of a modified version of the band;
Figure 10 is a view corresponding to Figure 2, but of that modified version of the band;
Figure 11 is a view corresponding to Figure 5, but for the modified filter element formed from the band of Figures 9 and 10;
Figure 12 shows a vertical axial section through a further modified form of the filter;
Figure 13 is a detail of Figure 12;
Figure 14 is a fragmentary side view showing a future central post of the filter of Figures 12 and 13, with a second modified version of the band in a form ready for the wrapping thereof around the central post to provide a future filtering element; and
Figure 15 is a side view of the second modified version of the band prior to wrapping.

In the preferred embodiments of the invention to be described, the filter is for run-off water. The complete filter includes a filter cartridge that is removably placed in a filter housing. Contaminated fluid enters the housing and pools on the top of a filter element of the filter cartridge. The fluid may be contaminated with solid particles, undesirable gases, dissolved chemicals, or other pollutants. From the top of the filter element, the contaminated fluid enters the element by flowing downwards, flows generally horizontally through the filtering media, and then flows downwards out of the cartridge itself. The filter housing has inlet and outlet means that lead the contaminated fluid to and the treated fluid away from the filter.

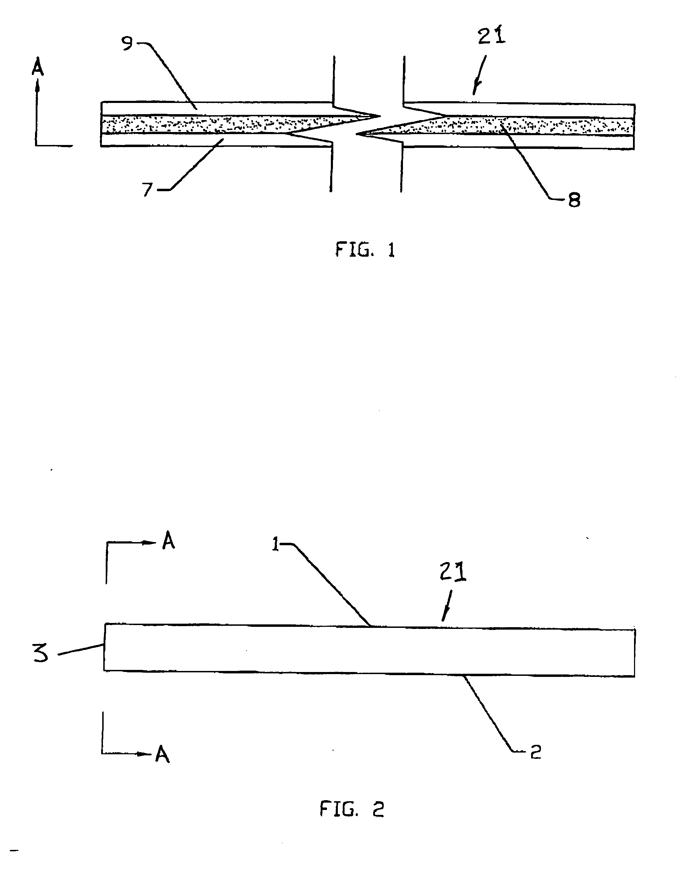

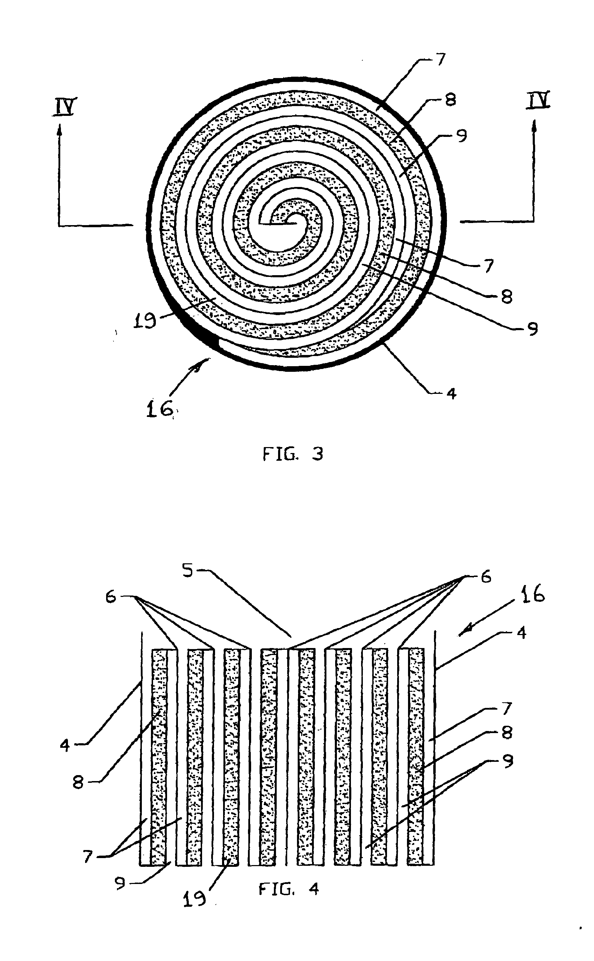

The filter cartridge 16 is constructed by rolling a layered band 21 around a centreline. Figure 1 shows a side view and Figure 2 shows a plan view of the band 21 with opposite longitudinal edges 1 and 2 indicated. The layered band 21 is significantly longer than it is wide, and is flexible enough to be rolled around itself. The filter element is constructed by taking a free end 3 of the band 21 and wrapping that end in the manner indicated by the line and arrows A-A in Figures 1 and 2. The layered band is long enough for the free end 3 to make more than one lap around a centreline and may be longer (up to many laps) to provide additional filtration capacity. The resulting element is then oriented so that the top 1 and bottom 2 are in the correct positions. A top plan view of the filter cartridge 16 is shown in Figure 3. An outer wall 4 is affixed to the rolled filter element 19 to provide a reservoir or buffer chamber 5 above the element 19. The seams 6 among the rolled layers may also be sealed to prevent the fluid from flowing between the layers instead of through the filter media.

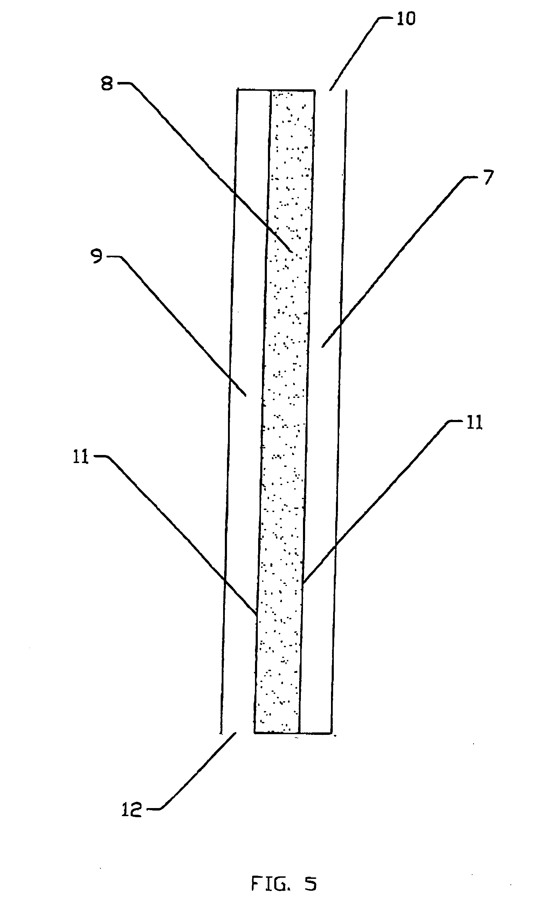

Figure 4 shows a vertical, arial section through the completed filter cartridge 16, taken along the line IV-IV in Figure 3. During operation, each "lap" around the centreline functions in the same way. Figure 5 shows a cross-section through a lap, which is thin relative to its length and its width so that it can have been rolled. It is shown in Figure 5 vertically oriented, i.e. in the same orientation it has in the complete filter. Each lap consists of three layers: an inlet layer 7, a filter media layer 8, and an outlet layer 9. The inlet layer 7 is at least partially open at its upper end, so as to allow water to enter the filter element 9 through one or more openings 10. The centre layer contains the filter media 8, which may be sand or cloth or other filter media, which may be selected specially for the type(s) of contaminant(s) anticipated in the influent fluid. If the media 8 is not relatively self-supporting, for example sand, then it is held in place by permeable barriers 11, through which the water can flow at a faster rate than it can flow through the filter media. Otherwise, i.e. if the media 8 is relatively self-supporting, e.g. cloth, the permeable barriers 11 would be omitted. Thus, the permeable barriers 11 are used when necessary in order to hold the media 8 in place. The third layer, the outlet layer 9 has one or more openings 12 at the bottom to allow the treated fluid to flow out of the filter cartridge 16.

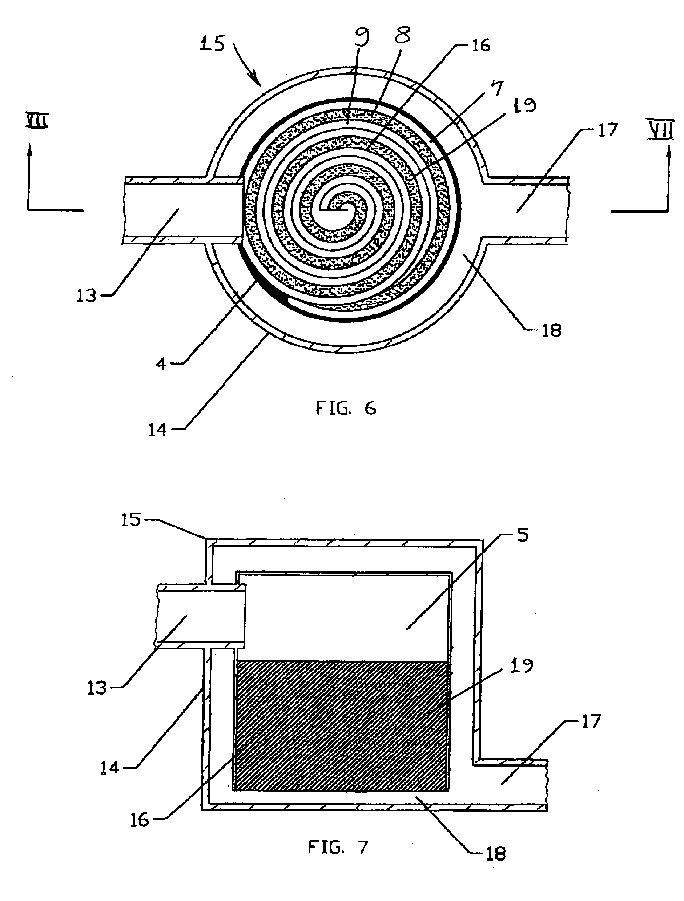

In the filter, the completed filter cartridge 16 is housed in a main structure 15 as shown in Figures 6 and 7. An inlet 13 penetrates through the peripheral wall 14 of the main structure 15 and through the peripheral wall 4 of the complete filter cartridge 16. The inlet 13 has a discharge location that enables the influent fluid to flow onto the top of the filter element 19. The inlet 13 is in communication with the reservoir 5, which is in communication with the cartridge inlet layer 7 through the opening (s) 10. In the preferred form of the filter, the reservoir 5 has a single influent flowpath (through the inlet 13) and a single outlet pathway (into the cartridge inlet layer 7 through the or each opening 10). An outlet 17 penetrates through the peripheral wall 4 of the main structure 15. The outlet 17 is in communication with an outlet chamber 18 of the main structure 15, which is in communication with the outlet layer 9 of the filter cartridge 16 through the opening(s) 12.

In a typical filter for filtering run-off water: (a) the layers 7 and 9 are respective strips of polypropylene cloth and have a thickness of approximately 0.3 inches (7.5mm) and a width of approximately 30 inches (75mm); and (b) the filtering layer 8 is a strip of high-grade geotextile fabric, has a thickness of approximately 0.3 inches (7.5mm) and a width of approximately 30 inches (75mm).

The strip 7 has one side edge that will be at the bottom end of the filter element 19 of Figure 4. Such edge is sealed with silicon. The upper side edge will be open and free to receive water from the reservoir 5 of Figure 7. The drain layer 9 has a first side edge that will be at the top end of the filter element 19 and sealed closed with silicon so that water may not flow through that edge. The lower side edge of the drain layer 9 is open so that the water in the drain layer 9 may flow out of the bottom end of the filter element 19. After the layers 7, 8 and 9 have been assembled as shown in Figure 1, they form a flexible band about one to two inches (25mm to 50mm) thick and many feet (1 foot = 30.48cm) long. The resulting band 21 is now wrapped around a central post, or centreline, so as to form a spiral.

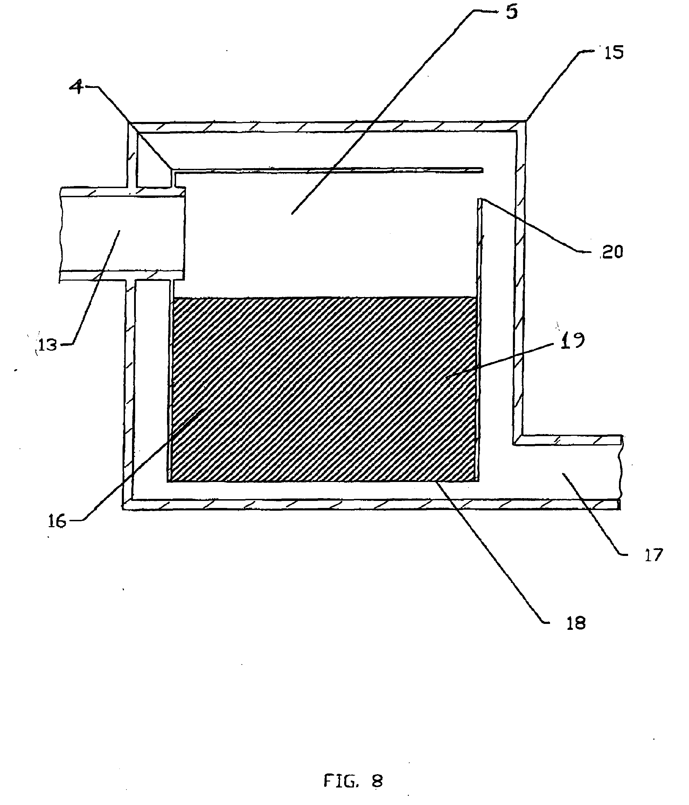

In operation of the version of the filter described with reference to Figures 1 to 7, contaminated fluid enters the filter through the inlet 13. The fluid flows from the inlet 13 into the reservoir 5, which is in communication with the inlet layer 7 in each lap of the rolled filter element 19. The contaminated fluid flows into the inlet layer 7 through the opening(s) 10 and, from the inlet layer 7, through a permeable barrier 11 if provided, substantially horizontally into the filter media 8. The fluid flows through the filter media 8, where the contaminants are removed by the media, and passes substantially horizontally, through another permeable barrier 11 if provided, into the fluid outlet layer 9. In the fluid outlet layer 9, the fluid flows downwards out of the filter cartridge 16 through the opening(s) 12 and into the outlet chamber 18. The treated fluid then flows to the outlet 17 and exits the filter through that outlet. If the flow into the filter through the inlet 13 exceeds the flow capacity of the filter media, the contaminated fluid backs up in the reservoir 5. When the head in this reservoir rises, whether that rise is due to rising fluid surface elevation or rising pressure, the fluid is driven through the filter media more quickly. The increased flow rate serves to relieve the rising head upstream of the filter. However, there are circumstances in which the fluid flow rate to be coped with is such that it could overwhelm the relief provided by that increased flow rate. In these circumstances, the version of Figure 8 can be more suitable since it has an overflow 20 from the reservoir 5, whereby the contaminated fluid can by-pass the element 19 and flow directly to the outlet 17. This version is particularly suitable in cases where it is expected that the degree of contamination of the fluid entering the filter would decrease with increasing flow rate.

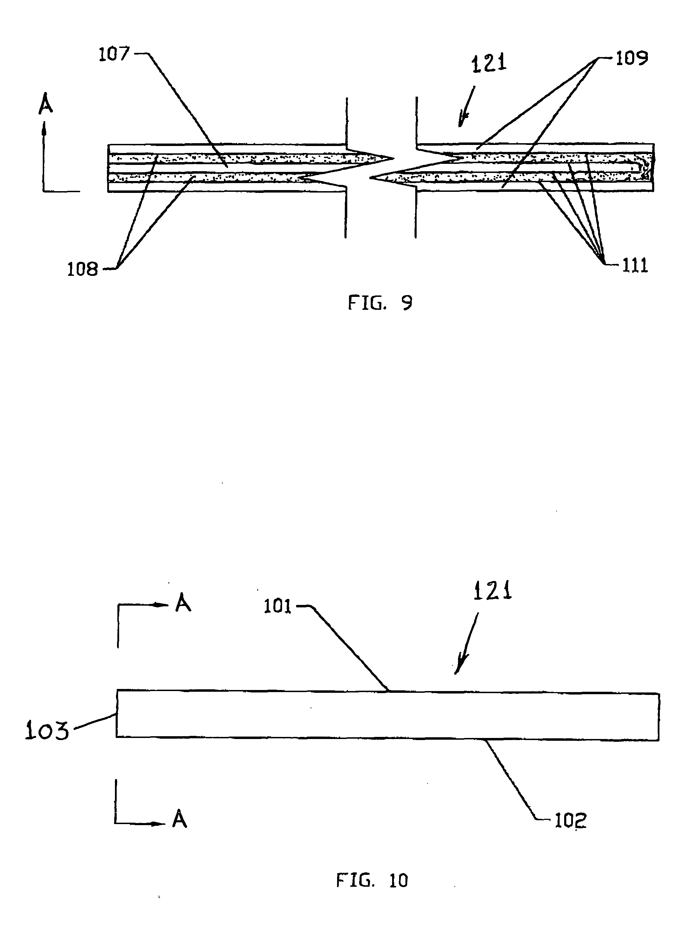

Figures 9 to 11 illustrate an alternative layering of the band. In these Figures, items corresponding to those illustrated in Figures 1, 2 and 5 have their reference numerals increased by 100. The filter element is again constructed by rolling the layered band 121 around a centreline. Figure 9 shows a side view and Figure 10 shows a plan view of the band 121, with the opposite longitudinal edges 101 and 102 indicated. The layered band 121 is significantly longer than it is wide, and is flexible enough to be rolled around itself. The filter element is constructed by taking a free end 103 of the band 121 and wrapping that end in the manner indicated by the line and arrows A-A in Figures 9 and 10. The band is long enough for the free end 103 to make at least more than one lap around a centreline, and may be longer to provide additional filtration capacity. The resulting element is then oriented so that the top 101 and bottom 102 are in the correct positions.

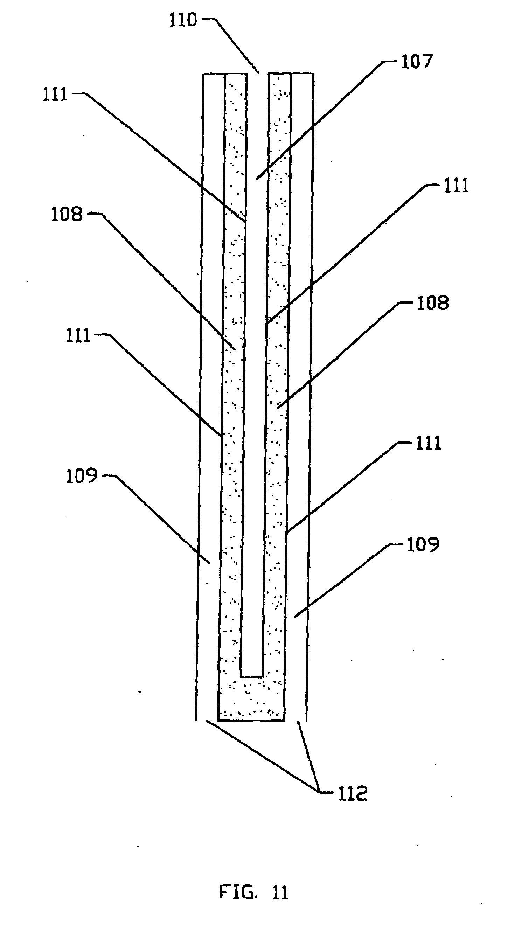

Figure 11 shows a cross-section through a lap, which is thin relative to its length and its width so that it can have been rolled. It is shown in Figure 11 vertically oriented, i.e. with the same orientation it has in the complete filter. Each "lap" consists of three components: a central inlet layer 107, a U-shaped (i.e. doubled) filter media layer 108, and outlet layers or drains 109. The inlet layer 107 is at least partially open at the top, so as to allow water to enter the filter element through one or more openings 110. The U-shaped media layer 108 contains the filter media 108, and surrounds the inlet layer 107. The filter media 108 can be selected specifically for the anticipated pollutants to be removed from the influent fluid, and can be sand, fabric, or other material. If the filter media 108 is of indeterminate shape (sand, for example), it is held in place by permeable barriers 111, through which the water can flow at a faster rate than it can flow through the filter media. The third component, the outlet layers or drains 109, are, if necessary, separated from the filter media 108 by permeable barriers 111. The outlet drains 109 have openings 112 at the bottom to allow the treated fluid to flow out of the filter element.

In the version of Figures 9 to 11, the completed filter element is placed in the filter housing in the same manner as it is in the version of Figures 1, 2 and 5.

The operation of a filter containing a filter element of the version of Figures 9 to 11 is very similar to that of the filter of Figure 7 or 8. Contaminated fluid enters the filter through the inlet 13. The fluid flows from the inlet 13 into the contaminated fluid reservoir 5, whence the fluid enters the filter element through the opening(s) 110. From the inlet layer 107, the fluid makes a right-angle turn in either direction to flow through the permeable barriers 111 (when present) into the filter media 108. The fluid flows through the filter media 108, where the contaminants are removed by the media, passes through the other permeable barriers 111 (when present), and into one of the two fluid outlet drains 109. In each fluid outlet drain 109, the fluid once again makes a right-angle turn to flow downward, out of the filter cartridge through the openings 112. The treated fluid flows from the filter cartridge into the outlet chamber 18 of the main structure 15. The treated fluid then flows to the outlet 17 and exits the filter through that outlet.

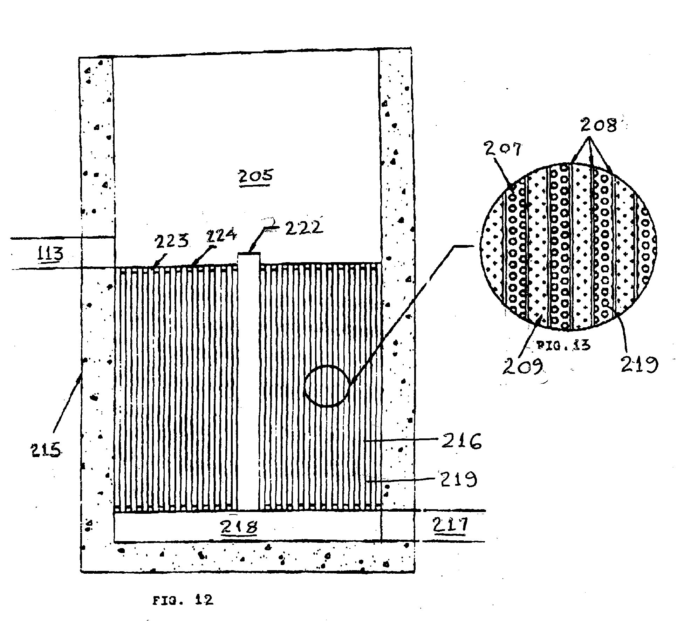

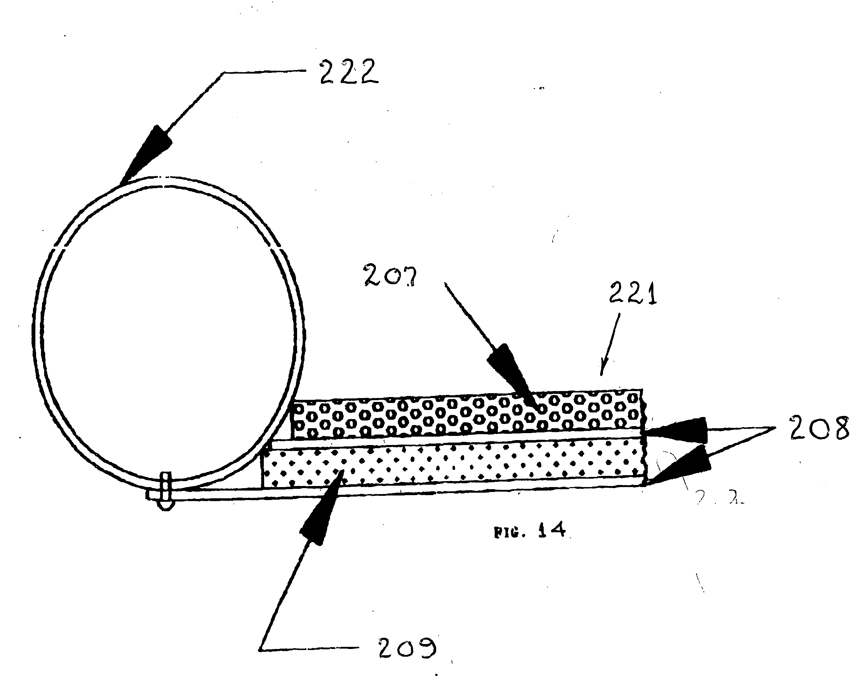

Figures 12 and 13 show the further modified version of the filter in its finally assembled form. Broadly described, a cylindrical chamber 215 has an inlet pipe 213 feeding water to the reservoir space 205 above the filter cartridge 216. The filter cartridge comprises spiral-shaped, flexible, strips 223 and 224. The strip 223 receives water from the space 205 but, since the strip 223 is sealed at its lower edge, the water in the strip 223 must move generally horizontally to the strip 224 which acts as a drain. The strip 224 allows the water to flow out of its lower edge to an outlet chamber 218 and an outlet pipe 217. The strip 223 is open at its upper edge but is sealed and closed at its lower edge, whereas the strip 224 is sealed and closed at its upper edge and is open at its lower edge.

In more detail, when the filter is for run-off water from a vehicle park, etc., the strip 223 of Figure 12 is in the form of an elongate inlet layer 207, whilst the strip 224 is in the form of two flexible long cloth strips 208 of filtering material encircling lengthwise an elongate outlet layer 209.

The sheet material which is wrapped around the central post 222 is shown in detail in Figure 15. In Figure 15, the filter cloth 208 is a non-woven geotextile made of polypropylene and surrounds the drain material layer 209. The filter cloth 208 is in two sheets, one on each side of the drain material 209. The two sheets of filter cloth 208 are sewn together at each end thereof, as indicated at 208a, thereby enclosing (except for the side edges)the drain material 209.

Each sheet of filter cloth 208 has one side edge that will be at the bottom end of the filter cartridge 216 of Figure 12. This edge is sealed with silicon. Its other side edge will be open and free to receive water from the space 205.

The layers 207 and 209 are preferably made of a drain material made of extruded polypropylene.

The layer 209 has a first side edge that will be at the top end of the filter element 219 and sealed closed with silicon so that water may not flow through that edge. The other side edge is open so that the water in the drain layer 209 may flow out of the bottom end of the filter element 219.

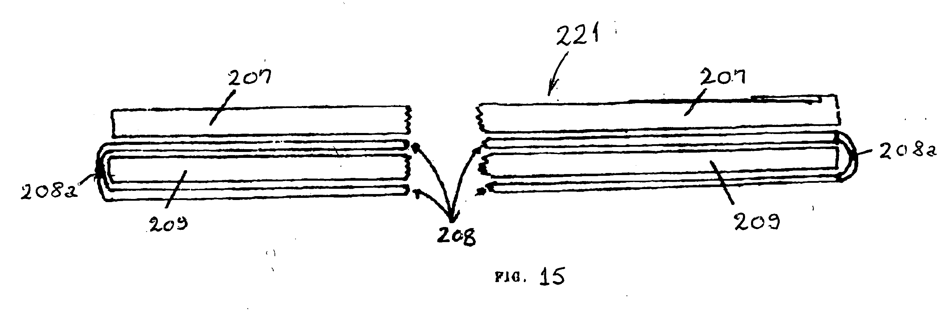

The strip 207 of drain material is composed of the same material and has about the same size as the layer 209 of drain material. The strip 207 differs from the layer 209 in that its side edge, that will be contiguous with the space 205 when the filter is assembled, is open, so that water may enter it from the space 205. Its bottom side edge is sealed. After the layers 207, 208 and 209 have been assembled as described above they form a flexible band 221 about one to two inches (about two-and-a-half to five centimetres) thick and many feet (at least several metres) long. The resulting band of Figures 14 and 15 is now wrapped around the central post 222, so as to form a spiral.

It is noted that Figures 14 and 15 do not show any filter cloth 208 on the top surface of the layer 207. However, when the four-layer band 221 of Figures 14 and 15 is wrapped around the post 222 the lowermost sheet of filter cloth 208 will have its bottom face contiguous with the top face of the layer 207 (except for the first lap). Therefore, the resulting filtering element 219 will have layers of polypropylene 207 and 209 separated by filtering cloth sheets 208.

Thus, when water is in the space 205, such water may pass into the layer 207 since it does not have a seal at its upper end. The water in the space 205 may not directly enter the layer 209 since it is sealed at its upper end. The water in the layer 207 must therefore pass horizontally through a sheet 208 (which is composed of high grade filtering material such as geotextile fabric, in the run-off example) to the layer 209 from which the water may exit into the chamber 218.

In a modified form of the version described with reference to Figures 14 and 15, further filtering material sealed at both its side edges is placed between the layers 208 and 209 and/or between the layers 207 and 208. Otherwise, this modified form is the same as the preferred form described with reference to Figures 14 and 15.

In a second modified form of the version described with reference to Figures 14 and 15, the inlet strip is of a double width to form a sandwich with the two sheets of the cloth 202 and the layer 209 in the sandwich. Otherwise, this modified form is the same as the preferred form described with reference to Figures 14 and 15.

In a third modified form of the version described with reference to Figures 14 and 15, the cloth is of a double width and is folded to form a sandwich that has the strip 207 in the sandwich. Otherwise, this modified form is the same as the preferred form described with reference to Figures 14 and 15.

In both of the second and the third modified forms referred to above, the fold is at the upper end of the filter element in the finally assembled filter.

The filters described with reference to the drawings have the following advantages, when applied to run-off water, over the filters now in use for that purpose:
a. large filtering surface relative to the volume of the filtering element;
b. high flow rate relative to the volume of flow and volume of the filtering element;
c. low manufacturing cost;
d. simplicity of manufacture;
e. high filtering efficiency;
f. flow through the filtering element can be in any direction, e.g. upwards or downwards.

## Claims

1. A method comprising producing a filter for filtering a fluid, said producing comprising:
providing a plurality of face-to-face layers (7-9; 107-109; 207-209) of flexible materials at least one (8; 108; 208) of which comprises filtering media, and
forming said layers (7-9; etc.) into a filter element (19; 219) by causing said layers (7-9; etc.) to extend around a linear central zone for more than 360 degrees, thereby to provide an overlap.

2. A method according to claim 1, wherein said forming comprises causing said layers (7-9;etc.) to extend around said central zone for at least 370 degrees.

3. A method according to claim 2, wherein said forming comprises causing said layers (7-9; etc.) to extend around said central zone for at least 720 degrees.

4. A method according to any one of claims 1 to 3, wherein said providing includes folding a strip of one of said materials to provide first and second layers (108) of said plurality of face-to-face layers (107-109).

5. A method according to claim 4, wherein said first and second layers (108) are of said filtering media.

6. A method according to claim 4 or 5, wherein said folding is longitudinally of said strip.

7. A method according to any preceding claim and further comprising passing said fluid into at least one (7; 107; 207) of said layers (7-9; etc.) in a direction generally parallel to said central zone.

8. A method according to claim 7, which said one (7;etc.) of said layers (7-9; etc.) promotes change of the direction of the flow of said fluid entering that one layer (7; etc.) to being transverse to said central zone.

9. A method according to any preceding claim, wherein said providing comprises positioning said layers (7-9; etc.) in a contiguous relationship with each other.

10. A filter for filtering a fluid, comprising a plurality of face-to-face layers (7-9; 107-109;207-209) of materials with at least one (8; 108; 208) of said layers (7-9; etc.) comprising filtering media, said layers (7-9; etc.) extending around a linear central zone for more than 360 degrees, thereby providing a filter element (19, 219) having an overlap.

11. A filter according to claim 10, wherein said overlap is of at least 10 degrees.

12. A filter according to claim 11, wherein said overlap is of at least 360°.

13. A filter according to any one of claims 10 to 12, wherein said layers (7-9; etc.) include an inlet layer (7; 107; 207; for receiving said the fluid to be filtered and a filtering layer (8; 108; 208) comprised of said filtering media.

14. A filter according to claim 13, wherein said inlet layer (7; 207) is accessible by said fluid at an edge thereof, is substantially impermeable by said fluid at an opposite edge thereof and is permeable by said fluid at a major surface thereof at said filtering layer (8; 208).

15. A filter according to claim 13 or 14, wherein said layers (7-9; etc.) comprise an outlet layer (9; 109; 209) at the opposite side of said filtering layer (8; etc.) from said inlet layer (7; etc.).

16. A filter according to any one of claims 10 to 15, wherein first and second layers (108) of said plurality of face-to-face layers (107-109) are provided by a U-section strip of one of said materials.

17. A filter according to claim 16 as appended to claim 13, wherein said first and second layers (108) are of said filtering media and include said filtering layer (108).

18. A filter according to claim 17, wherein said strip embraces said inlet layer (107).

19. A filter according to claim 18 as appended to claim 15, wherein said outlet layer (109) is situated at the opposite side of the first layer (108) from the inlet layer (107) and another outlet layer (109) of said plurality of face-to-face layers (107-109) is situated at the opposite side of the second layer (108) from the inlet layer (107).

20. A filter according to any one of claims 10 to 19 and further comprising a reservoir (5; 205) immediately upstream of said filter element (19; 219), and a plurality of inputs from said reservoir (5; 205) to said face-to-face layers (7-9; 207-209).

21. A filter according to any of claims 10 to 20, wherein said filter element (19; 219) is of a curved spiral shape.

22. A filter for use in filtering a fluid, said filter comprising sheet material comprised of an inlet volume (7; 107; 207) and an outlet volume (9; 109; 209) and a filtering layer (8; 108; 208) permeable by said fluid and sandwiched between them, said inlet volume (7; 107; 207) being accessible by said fluid at an input, linear edge (10; 110) thereof and permeable by said fluid at its major surface at said filtering layer (8; 108; 208).

23. A filter according to claim 22, wherein said inlet volume is substantially impermeable by said fluid at an edge thereof opposite to said input, linear edge (10; 110) thereof and at a major surface thereof opposite to the first-mentioned major surface thereof.

24. A filter according to claim 22, wherein said inlet volume (107) is embraced by a U-section strip of filtering material providing said filtering layer (108 and a second filtering layer (108).

25. A filter according to claim 24, wherein said outlet volume (109) is situated at the opposite side of the first-mentioned filtering layer (108) from said inlet volume (107) and a second outlet volume (109) is situated at the opposite side of said second filtering layer (108) from said inlet volume (107).

26. A filter according to any one of claims 22 to 25 and further comprising a reservoir (5; 205) immediately upstream of said inlet volume (7; etc.), and a plurality of inputs from said reservoir (5; 205) to said inlet volume (7; etc.).

27. A filter according to any one of claims 22 to 26, wherein said inlet volume (7; etc.), said filtering layer (8; etc.) and said outlet volume (9; etc.) are of curved spiral shape.
